# EUROPÄISCHE PATENTSCHRIFT

(11) **EP 2 161 219 B1**
(45) Veröffentlichungstag und Bekanntmachung des Hinweises auf die Patenterteilung: **16.11.2011**
(21) Anmeldenummer: 09169213.7
(22) Anmeldetag: 02.09.2009
(51) Int. Cl.: B65G 1/137

(54) **Verfahren und Vorrichtung zur visuellen Unterstützung von Kommissioniervorgängen**
Method and device for visual support of picking processes
Procédé et dispositif de soutien visuel de procédés de commissionnement

(30) Priorität: 05.09.2008 AT 4772008 U
(43) Veröffentlichungstag der Anmeldung: 10.03.2010
(73) Patentinhaber: KNAPP Systemintegration GmbH, 8700 Leoben (AT)
(72) Erfinder: Stelzer, Peter, 8101, Gratkorn (AT); Dax, Josef, 8044, Graz (AT); Grablechner, Manfred, 8793, Trofaiach (AT)
(74) Vertreter: Wirnsberger, Gernot

(56) Entgegenhaltungen:
- EP-B1- 1 799 594
- DE-A1- 3 434 572
- US-A- 5 877 962
- US-A1- 2004 153 207
- US-A1- 2005 140 498
- US-B1- 6 711 458
- US-B2- 7 143 041
- RUPERT REIF ET AL: "Augmented & Virtual Reality applications in the field of logistics" THE VISUAL COMPUTER ; INTERNATIONAL JOURNAL OF COMPUTER GRAPHICS, SPRINGER, BERLIN, DE, Bd. 24, Nr. 11, 27. August 2008 (2008-08-27), Seiten 987-994, XP019656368 ISSN: 1432-2315
- BJÖRN SCHWERDTFEGER ET AL: "Mobile Information Presentation Schemes for Supra-adaptive Logistics Applications" 1. Januar 2006 (2006-01-01), ADVANCES IN ARTIFICIAL REALITY AND TELE-EXISTENCE LECTURE NOTES IN COMPUTER SCIENCE;;LNCS, SPRINGER, BERLIN, DE, PAGE(S) 998 - 1007 , XP019051858 ISBN: 9783540497769 * das ganze Dokument *
- W. DANGELMAIER, B. MUECK,M.HÖWER, AND W. FRANKE: "AR Support for Picking", SIMULATION UND VISUALISIERUNG 2005, March 2005 (2005-03), pages 355-364, SCS European Publishing House ISBN: 3-936150-40-0
- Reif, R., Walch, D., Wulz, J.: "Einsatz von Virtual und Augmented Reality: Studie zur menschorientierten Simulation und Prozessunterstützung im logistischen Umfeld", August 2007 (2007-08), Studie aus dem Bayerischen Forschungsverbund Supra-adaptive Logistiksysteme (ForLog), Garching bei München
- REIF, R., WALCH, D., GÜNTHNER, W. A.: "Evaluierung eines Augmented Reality unterstützten Kommissioniersystems", VIRTUAL REALITY UND AUGMENTED REALITY ZUM PLANEN, TESTEN UND BETREIBEN TECHNISCHER SYSTEME, VR UND AR AUTOMOTIVE., June 2008 (2008-06), pages 251-260, ISBN: 978-3-8167-7630-7

## Beschreibung

Die vorliegende Erfindung betrifft ein Verfahren zur visuellen technischen Unterstützung von manuellen Kommissioniervorgängen durch eine Vorrichtung mit zumindest einer mobilen Einheit, aufweisend eine optosensorische Erfassungseinrichtung, eine optische Anzeigevorrichtung, eine Datenverarbeitungseinrichtung und eine Datenschnittstelle zur kabellosen Verbindung mit einer stationären EDV-Anlage, welche neben Warenmanagement-Software eine Verbindungseinrichtung für alle aktiven mobilen Einheiten aufweist.

Eine Vielzahl von unterschiedlichen Systemen wird gegenwärtig zur Kommissionierung in Warenlagern eingesetzt. Neben der statischen Bereitstellung (Mann-zur-Ware-Systeme) wird immer häufiger auch die dynamische Bereitstellung (Ware-zum-Mann-Systeme) mittels Hochregallager, Umlaufregalanlagen, Durchlaufregallager und Paternosteranlagen angewendet. Letztere hat den Vorteil eines geringen Platzbedarfs und Reduktion der Arbeit auf Erkennen, Greifen und Bestätigen. Nachteilig sind der hohe infrastrukturelle und maschinelle Aufwand, hohe Kosten der Gesamtanlage und schlechte Zugänge bei Ausfällen. Ein Motorausfall kann zum Stillstand der Kommissionierung führen.

Häufig werden Technologien eingesetzt, die als Pick-to-Light oder Pick-by-Voice bekannt wurden. Im ersten Fall wird einem Kommissionierer am Lagerplatz über eine Vorrichtung durch Anzeigeinstrumente mitgeteilt, welche Ware und in welcher Menge er entnehmen soll; nach Entnahme bestätigt der Anwender per Knopfdruck. Fehlgriffe oder unerlaubte Warenentnahmen sind hier nicht vermeidbar. Der Aufwand für die Anzeigeinstrumente bzw. -vorrichtungen ist auch erheblich. Daneben sind stationäre Bildschirme mit Positionsangabe, Warenart und Menge mit einer Sachbearbeiterdatei verknüpft an verschiedenen Punkten im Raum zum Abrufen eingesetzt. Pick-by-Voice erlaubt das freihändige Manövrieren über akustische Kommandos; ein Mikrofon erlaubt die Rückmeldung zur Bestätigung. Grundsätzlich wurden bereits viele Elemente derartiger Technologien insbesondere durch Forschungsarbeiten der Technischen Universität München, Lehrstuhl für Fördertechnik Materialfluss Logistik offenbart. Dazu gehören auch Pick-by-Vision-Systeme in Erprobungsphase. Diese beinhalten Datenhelme mit Informationseinblendungen ins Sichtfeld, wie optische Hervorhebung eines Lagerfaches, visuell unterstützte Wegfindung und Weginformationen. Weitere bekannte Vorrichtungen wie Augmented-Reality-Vorrichtungen werden für Head-Mounted-Displays, insbesondere in verschiedenen Anwendungen wie bei Computerspielen, bei Simulatoren für Arbeitsschritte oder Inspektions- oder Datenvergleichsaufgaben, eingesetzt.

In der DE 102 15 885 A1 ist ein Verfahren zur automatischen Prozesskontrolle mit einem Augmented-Reality-System mit Kamera, Datenbrille und Protokolleinrichtung beschrieben. Dieses Verfahren und die Vorrichtung dafür dienen vorwiegend einer Protokollierung und Analyse von Manipulationsvorgängen auf ordnungsgemäße Durchführung.

Das Dokument US6711458 beschreibt ein system zur visuellen Unterstützung von manuellen Kommissionier vorgängen mit eine mobilen Einheit umfassend eine ontosensorischen Erfassungseinrichtung. Als Stand der Technik wird auch die Verwendung von Augmented Reality als Montagehandbuch-Ersatz beispielsweise in der Flugzeugmontage genannt.

Primäre Aufgabe der Erfindung ist es nun, auf diesen Stand der Technik aufbauend ein Verfahren und eine Vorrichtung zu schaffen, welche geeignet ist, die Grundaufgaben einer Kommissionierung durch Navigation zu unterstützen. Diese Grundaufgaben sind z. B.: Nehme einen vorgegebenen Behälter oder eine bestimmte Transporthilfe; gehe zu einem vorgegebenen Artikelstandort, entnehme dort die vorgegebene Anzahl von diesem Artikel und lege ihn in den Behälter oder die Transporthilfe; gehe zum nächsten Artikelstandort und so weiter; und schließlich: bring den Zielbehälter an den Behälter-Zielort. Der Benutzer soll ohne besondere Kenntnisse eine Supportvorrichtung von einem Standort, z. B. einer Ladestation, nehmen können. Der Rest der Aufgaben soll durch die Vorrichtung in eindeutiger Weise und mit wirkungsvoller Kontrolle rasch und einfach, weg- und zeitoptimiert durchführbar sein. Unterbrechungen und Fortsetzungen durch andere Mitarbeiter sowie Tausch von Behälter oder Hilfsvorrichtung sollen jederzeit ohne Fehler für die Kommissionierungen erfolgen können. Wegeoptimierung und Kollisionsvermeidung sind weitere Aspekte der Erfindung. Ebenfalls sollen plötzliche Prioritätsaufgaben unkompliziert sofort und ohne Zeitverluste eingeschoben werden können. Die unterschiedlichen Aufgaben sollen von einem oder mehreren Mitarbeitern durchführbar sein. Auch soll die Möglichkeit der Abarbeitung einer Liste von mehreren Mitarbeitern bzw. Kommissionierem zeitgleich ermöglicht werden, ohne dass es zu Doppelgriffen kommt.

Erfindungsgemäß wird zur Lösung der Aufgabe ein Verfahren zur visuellen technischen Unterstützung von manuellen Kommissioniervorgängen gemäß Anspruch 1 vorgeschlagen. Dazu dient eine Vorrichtung mit zumindest einer mobilen Einheit und einer stationären zentralen EDV-Anlage. Die EDV-Anlage und die mobile Einheit können über eine kabellose Verbindung kommunizieren, wobei notwendige Daten ausgetauscht werden. Die mobile Einheit weist dazu eine optosensorische Erfassungseinrichtung auf, um deren Umgebung zu erfassen. Eine optische Anzeigevorrichtung in der mobilen Einheit dient der Darstellung von Informationen; eine Datenverarbeitungseinrichtung dient der Aufbereitung der Informationen für die Darstellung und zur Vorbereitung für die Datenübertragung aufgrund der optosensorischen Erfassung. Die stationäre EDV-Anlage ist mit einer Warenmanagement-Software ausgestattet, die Zugriff auf die Daten aller aktiven mobilen Einheiten über die kabellose Verbindung hat. Wesentlich dabei ist, dass jede mobile Einheit zyklisch Navigationsinformationen empfängt und diese in Form von Wegweisern, insbesondere (Richtungs-)Pfeilen, über die optische Anzeigevorrichtung ausgegeben werden. Dazu erfordert das Verfahren, dass die Daten zur spezifischen Navigation aufgrund eines Datenvergleiches der Daten aus der jeweiligen optosensorischen Erfassungseinrichtung jeder mobilen Einheit mit Referenz- oder Modelldaten in der EDV-Anlage oder auch gespeichert innerhalb der mobilen Einheit verglichen werden, um den Standort der eindeutig identifizierten mobilen Einrichtung eindeutig zu definieren. Mithilfe dieser Daten kann die Software der EDV-Anlage oder auch jene der mobilen Einheit aufgrund der systembekannten Lage-Position des aktuellen Zielobjektes die Weginformation oder die Produktidentifikation ermitteln und zur Anzeige an der adressierten mobilen Einheit bringen.

Als weiteres grundlegendes Merkmal soll die neue Navigationsinformation für das nächste Objekt einer zugeordneten Warenliste erst nach der optischen Erfassung des aktuellen Objektes und eindeutiger Identifizierung desselben erfolgen. Wichtig ist dabei die eindeutige Erfassung und Protokollierung des Kommissioniervorganges eines Waren-Objektes vom Lagerplatz in den Zielplatz. Ist keine geforderte Ware am Zielort, muss ein Platzhalter-Ersatzobjekt, z. B. ein gedrucktes Blatt mit eindeutiger Identifikation, in die Transporthilfe gegeben werden. Darauf können Hinweise für den Warenempfänger notiert sein. Das System erfährt eine Rückmeldung über ein Warendefizit.

Zweckmäßigerweise findet vor Beginn der Navigation für eine neue Warenzusammenstellung oder Warenergänzung eine Navigation zur aktuell zu benutzenden im ersten Fall leeren oder im zweiten Fall bereits teilgefüllten Transporthilfe statt und wird bei vorzeitiger Unterbrechung einer vollständigen Warenzusammenstellung eine Position der Transporthilfe für eine spätere Fortsetzung und Beendigung des Auftrages an die stationäre EDV-Anlage gesendet und gespeichert oder erfolgt nach erfolgreicher Beendigung des Auftrages die Navigation der Transporthilfe mit beinhaltender vollständiger Warenzusammenstellung zur gemeinsamen Zielposition. Für gewöhnlich wird für eine Warenzusammenstellung eine Transporthilfe verwendet, z. B. ein Korb oder Transportwagen. Vorteilhaft ist es dann, einen neu angemeldeten Benutzer durch Navigation zur aktuell zu benutzenden Transporthilfe zu führen. Diese kann leer oder bereits teilgefüllt sein. Letzteres ist bei Unterbrechung einer Aufgabenliste, z. B. bei Pausen, Tagesarbeitszeit-Ende oder Schichtwechsel von Vorteil. Wurde eine Transporthilfe mit allen Waren laut Aufgabenliste gemäß Warenmanagementprogramm der EDV-Anlage zusammengestellt, wird diese vorteilhaft zur Zielposition navigiert. Dabei kann eine Zielposition für jeden Auftrag verschieden sein.

Vorteilhaft zur Kontrolle und Überwachung der Arbeitsprozesse ist ein Erfassen nicht autorisierter Bewegungen eines Objektes von dessen Lagerstandort oder aus der Transporthilfe oder der Transporthitfe selbst mithilfe der optosensorischen Erfassungseinrichtung und deren Auswertung mithilfe der Software der stationären EDV-Anlage. Dadurch werden Fehlern vorbeugende Maßnahmen wie Warnhinweise über die optische Anzeigevorrichtung durch entsprechende Fehlercode-Übermittlung möglich.

Idealerweise und aufgrund ihrer erzieherisch wirkenden Weise wird eine akustische Alarmierung bei optisch erfassten Fehlhandlungen ausgelöst.

Zur Unterstützung oder Kontrolle bei der Erfassung der Position und Orientierung sind Inertialsensoren zur vollständigen Erfassung einer Bewegung und Orientierung eines Kommissionierers vorteilhaft. Die Inertialsensoren können durch ortsfeste optisch erfasste Marker, deren Position dem System bekannt ist, kalibriert werden. Umgekehrt erlaubt es dies, bewegliche optisch erfasste Objekte gegenüber ihrem Sollstandort zu überprüfen. Ist ein kalibrierter Inertialsensor an der Hand des Kommissionierers angebracht und wird dieser zur Position einer beweglichen Systemkomponente oder einer Ware geführt, deren Standort nicht die Sollposition ist, erkennt die Software dies und kann ebenfalls korrigierende Maßnahmen einsetzen. So kann beispielsweise eine Ware aus einem Regal gefallen sein; die mobile Einheit erhält bei Berührung den Standort des korrekten Lagerplatzes übermittelt.

Eine Vorrichtung zur Durchführung des erfindungsgemäßen Verfahrens ist im Anspruch 6 definiert. Die Vorrichtung weist zumindest eine mobile Einheit auf. Es können mehrere solcher mobiler Einheiten in einem Lager gleichzeitig eingesetzt werden. Diese kommunizieren mit einer zentralen EDV-Anlage. Die mobile Einheit weist eine optosensorische Erfassungseinrichtung, eine optische Anzeigevorrichtung, eine Datenverarbeitungsvorrichtung sowie Software zur Bilddatenverarbeitung auf und ist mit einer kabellosen Datenschnittstelle zur Datenübertragung ausgestattet. Die Datenübertragung erfolgt immer mit der zentralen Datenverarbeitungsvorrichtung, z. B. über ein kabelloses Netzwerk (Wireless Local Area Network [WLAN] oder eine Bluetooth-Verbindung). Neben diesen an sich bekannten Einrichtungen ist als dritte Komponente die Geometrie des Lagers und die vollständige Erfassung aller Dimensionen und Warenpositionen in einer virtuellen Modellierung das entscheidende Merkmal der Erfindung. Raum, Ware und Geräte müssen eine Einheit bilden. Neben geografischen Anordnungen von Lagereinrichtungen und/oder optisch erfassbaren Gegebenheiten durch Form, Farbe und/oder Muster können plakatartige Anbringungen geeignet gestaltet sein, um für möglichst viele Objekte eine eindeutige Ermittlung der Position und der Orientierung in einem Warenlager durch die optosensorische Erfassungseinrichtung zu gewährleisten. Dazu dienen geometrische Ähnlichkeitsalgorithmen, z. B. Bildanalyseverfahren in der zentralen und/oder der mobilen Datenverarbeitungseinrichtung.

Vorteilhaft lässt sich als optosensorische Erfassungseinrichtung ein Muster-Scanner mit Laser, insbesondere ein Barcodescanner, einsetzen. Dabei müssen die aktuellen Positions- und Orientierungsinformationen in Anbringungen am Boden, an Wänden, der Ware oder Regalen durch Muster, insbesondere Barcodes, von der Datenverarbeitungsvorrichtung der mobilen Einheit oder nach Übertragung der Musterinformation von der zentralen EDV-Anlage ermittelt werden. Der Laser der Erfassungseinrichtung könnte theoretisch auch für die optische Anzeigevorrichtung eingesetzt werden.

Zur Unterstützung können passive Transponder (Radio-Frequency-ldentification-tags bzw. RFID-tags) zur Positionsanalyse im Lager angebracht sein. Dann muss eine Transponder-Leseeinrichtung in den mobilen Einheiten vorgesehen sein. Der Code der Transponder lässt aufgrund der Warenmanagement-Software Rückschlüsse auf Position, Orientierung und/oder Bezeichnung der Ware zu.

Für Augmented Reality ist es vorteilhaft, wenn die optosensorische Erfassungseinrichtung ein Kameramodul ist. Mithilfe von Bilddatenanalyse, unterstützt durch Anbringungen am Boden, an Wänden, Regalen, Lagerplätzen oder am Produkt, können aktuelle Positions- und Orientierungs- oder Produktinformationen aus Farben, Formen und Mustern ermittelt werden - entweder bereits in der mobilen Einheit oder nach Bildübermittlung durch die zentrale Datenverarbeitungsrichtung. Das erfasste Videobild kann mit der Zusatzinformation der Navigation ausgestattet an mindestens einem Videodisplay ausgegeben werden.

Grundsätzlich kann die optische Anzeigevorrichtung Leuchtdioden, ein Display, insbesondere ein Display des Typs Liquid Crystal Display (LCD) oder Organic Light Emitting Diode (OLED), oder Kombinationen davon aufweisen. Wichtig dabei ist, dass die Anzeigevorrichtung geeignet ist, die Gehrichtung in codierter Form oder durch Wegweiser, insbesondere in Form von Richtungspfeilen, darzustellen.

Als optische Anzeigevorrichtung eignet sich auch ein Laser-Projektor. Dieser eignet sich, Wegweiser auf umliegende Objekte, insbesondere einen Boden, zu projizieren oder bei entsprechender Identifizierung das jeweilige Zielobjekt durch Bestrahlung direkt zu markieren.

Vorteilhaft ist die Integration eines Inertialsensors, insbesondere eines Drehratensensors. Dieser ermöglicht zusätzlich die Erfassung von Bewegung oder Drehbewegung. Die Korrektur der Richtung in der Anzeigevorrichtung kann dadurch auch zwischen zwei optosensorischen Positions- und Orientierungserfassungen durchgeführt werden.

Wird als optosensorische Erfassungseinrichtung ein Laser-Scanner eingesetzt, ist es besonders vorteilhaft, den Laser über seine Ablenkungsvorrichtungen auch zur Anzeige der Informationen oder Wegweiser einzusetzen, indem zwischen Anzeige und Scan-Mode hin und her geschaltet werden kann. Wird umgekehrt ein Laser-Projektor eingesetzt, kann dessen Laserstrahl bei geeigneter Ablenkung auch als Komponente für einen Laser-Scanner dienen.

Vorteilhaft ist auch eine Augmented-Reality-Darstellung auf der Anzeigevorrichtung. Dabei werden die real erfassten Daten, insbesondere Videodaten direkt oder aus bestimmten Kenngrößen daraus konstruierte virtuelle Daten, mit geometrischer Information über das Lager und seinen Aufbau zu Augmented-Reality-Daten verknüpft. Der Benutzer insbesondere einer Videobrille oder eines Datenhelmes bekommt so eine virtuelle Ansicht seines Umgebungsraumes mit oder ohne Einbindung der realen Bilder. Zusätzliche Informationen werden in diese virtuelle Darstellung eingebettet.

Zur dreidimensionalen Wahrnehmung ist es vorteilhaft, wenn die Daten der optosensorischen Erfassungseinrichtung entweder durch zwei beabstandete Sensoren oder durch Bildumrechnung aufgrund der gespeicherten geografischen Daten des Lageraufbaus in eine räumliche Darstellung für die beiden Augen des Betrachters übergeführt werden. Eine geeignete optische Anzeigevorrichtung ist beispielsweise eine 3D-Brille; eine Shutterbrille ermöglicht eine dreidimensionale Tiefenwirkung beim Betrachter. Dazu dienen zwei berechnete oder erfasste Blickwinkel des virtuellen oder reellen Bildes mit Zusatzinformation und deren Wiedergabe für die beiden Augen des Betrachters. Zur Fokussierungsunterstützung und blickrichtungskorrekten Darstellung kann die Bewegung der Augen erfasst werden.

Die vorliegende Erfindung wird anhand der nachfolgenden praktischen Ausführungsformen beschrieben. Es zeigen:
Fig. 1 ein Beispiel der erfindungsgemäßen Vorrichtung mit mobilen Handgeräten;
Fig. 2 ein weiteres Ausführungsbeispiel der erfindungsgemäßen Vorrichtung mit Videobrillen;
Fig. 3 einen Datenhelm zur Verwendung als mobile Einheit;
Fig. 4 eine stirnbandartige Kopfbefestigung für eine weitere Ausführungsform der mobilen Einheit;
Fig. 5 einen Helm mit Projektionsvorrichtung als Anzeigevorrichtung;
Fig. 6 bis 9 Sichtfelder eines Kommissionierers bei einem typischen Kommissioniervorgang.

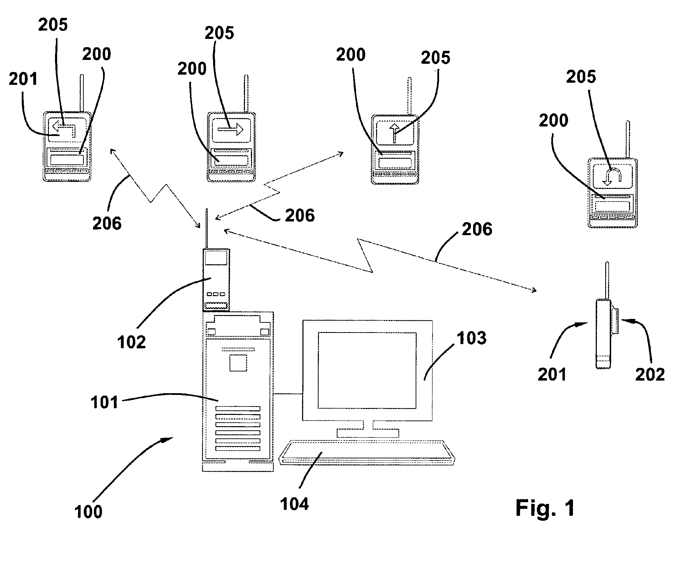

In Fig. 1 ist der Geräteaufwand für die Pick-by-Vision-Methode als erstes Beispiel dargestellt. Eine EDV-Anlage 100 besteht aus einem Rechner 101 und einer Kommunikationsschnittstelle bzw. Verbindungseinrichtung 102 zur kabellosen Verbindung mit mobilen Einheiten 200. Eine Tastatur 104 erlaubt die Eingabe von Daten, insbesondere den Aufruf von Funktionen eines Warenmanagement-Systems. Vieles erfolgt automatisiert, beispielsweise Bestellungen von Kunden. Der Lagerbestand ist ständig aktuell abrufbar. Engpässe sollen vermieden werden. Über einen Monitor 103 kann die Warenmanagement-Software einem Benutzer alle aktuell aktiven mobilen Einheiten mitteilen. Weitere abrufbare Informationen sind aktuelle Benutzer, Zahl der korrekten Warenzugriffe, Zahl der Fehlerhinweise, Kommissionier-Beginn und Endzeitpunkte, fehlende Waren, Auftragseingänge, Verfolgung des Auftragsstatus, Ermittlung eines möglichen Lieferzeitpunktes, Über- oder Unterbelegung. Die mobilen Einheiten 200 weisen eine optische Anzeigevorrichtung 201, eine optosensorische Erfassungseinrichtung 202 und eine Vorrichtung zur Datenverarbeitung und Kommunikation über eine kabellose Verbindung 206 auf.

Ein Ablauf ist beispielsweise, kurz dargestellt, wie folgt: Ein neu eingestellter, nicht eingeschulter Kommissionierer wird gebeten, eine mobile Einheit 200 aus einer Ladestation für Akkumulatoren zu nehmen. Für gewöhnlich ist diese voll aufgeladen. Ist der Ladezustand ungeeignet, kann eine Sperre die Entnahme solange verhindern, bis der optimale Ladezustand erreicht ist. Der Kommissionierer nimmt ein geeignetes Gerät und schaltet die mobile Einheit 200 ein. Die Software fährt hoch, und die kabellose Schnittstelle erwartet die Anmeldesequenz. Die mobile Einheit 200 wird durch die EDV-Anlage 100 aufgrund einer zyklischen Abfrage über neue Anmeldungen erkannt. Nach Erfassung des neuen Gerätes durch die Zentrale wird der aktuelle Gerätestand erhöht. An der Anzeigevorrichtung 201 der mobilen Einheit 200 wird eine Nutzeridentifikation abgefragt. Zu diesem Zweck wurde vom neuen Kommissionierer entweder sein Gesicht im System mit seinen Daten verknüpft oder ein Ausweis mit einem persönlichen Barcode, eventuell auch als Aufkleber, Annäher oder Aufdruck an einer Schutzkleidung oder einem Helm angebracht. Der Kommissionierer hält die optosensorische Erfassungseinrichtung 202, z. B. eine Kamera, gegen sein Gesicht oder den Code und das System sendet die Freigabe an die mobile Einheit 200 für die Aufgabendurchführung. In der EDV-Anlage 100 wird die Gerätenummer mit der Benutzer-Identität verknüpft, gleichzeitig erfolgt ein Zeitstempel für den Arbeitsbeginn. Die EDV-Anlage 100 weist die nächste zu erbringende Warenliste gemäß einem Prioritätenplan der aktuellen mobilen Einheit 200 zu. Zuerst wird der Kommissionierer über das Display mit Namen begrüßt. Hier besteht die Möglichkeit im Falle eines ldentifikationsfehlers, die Arbeit rechtzeitig zu beenden. Eventuell kann der Code falsch sein, eine falsche Arbeitskleidung wurde angezogen oder die mobile Einheit 200 wurde versehentlich einem anderen Kommissionierer zugewendet. Durch Neustart (Ein- und Ausschalten) kann die Anmeldung wiederholt werden. Die fehlerhafte Anmeldung wird jedoch protokolliert. Ist die Begrüßung abgeschlossen, hat der Kommissionierer nun nur noch den Weisungen der mobilen Einheit 200 für den Weg zu folgen. Zunächst wird der Kommissionierer zu einer Transporthilfe gelotst. Pfeile 205 am Display geben den Weg vor. Markante Objekte oder Kreuzungen am Weg können auch in der optischen Anzeigevorrichtung 201 angezeigt sein. Die zu wählende Transporthilfe ist eindeutig von der Zentrale bzw. EDV-Anlage 100 zugeordnet. Dies erlaubt auch die Fortsetzung einer begonnenen, aber nicht beendeten Zusammenstellung von Waren, auch eines anderen Kommissionierers. Bei Erreichen der Transporthilfe wird die Instruktion zur Mitnahme derselben übermittelt. Wird durch die Erfassungseinrichtung die Transporthilfe eindeutig identifiziert, was auch durch einen Barcode erfolgen kann, und vom Standort wegbewegt, wird das Ziel des nächsten Elementes der Aufgabenliste des Benutzers an die mobile Einheit 200 übermittelt. Wieder erfolgt die Wegführung. Standort und Ziel sind zwei geografische Punkte, welche über Software an der mobilen Einheit 200 oder in der Zentrale bzw. EDV-Anlage 100 für einen Autorouting-Prozess durch das Lager über den kürzesten Weg verwendet werden. Als Folge gibt die mobile Einheit 200 die Marschrichtung durch Pfeile 205 vor, die Bewegung des Kommissionierers durch das Lager wird optosensorisch erfasst. Die Kamera auf der mobilen Einheit 200 ermöglicht einen Bilddatenvergleich mit gespeicherten und geografisch zugeordneten Lagerpositionen und -orientierungen. So kann eine bestimmte Barcode-Plakette genau den Standort definieren. Die Orientierung kann zusätzlich durch Drehsensoren, z. B. nach dem Kreiselprinzip erfasst werden, damit ein für die Ausrichtung der Kamera auf die Barcode-Plakette definierter Blickwinkel bei einem Schwenk entsprechend in der Richtungsangabe berücksichtigt wird. Am Zielort erkennt die optosensorische Erfassungsvorrichtung 202 das Zielobjekt. Die Anzeige verdeutlicht das Objekt durch geeignete Hervorhebung. Wird das richtige Objekt in die Transporthilfe bewegt, erkennt die Erfassungseinrichtung dies, z. B. da zwei Bildbestandteile zur Deckung gebracht werden. Der Vorgang ist abgeschlossen, die nächste Lotsung erfolgt. Wird die mobile Einheit 200 abgeschaltet, wird der aktuelle Kommissionierstatus mit Zeitprotokollierung für den Benutzer abgespeichert und in die Gesamtheit aller Aufträge eingegliedert. Werden alle Elemente einer Aufgabenliste abgearbeitet, also in die Transporthilfe gebracht, erfolgt zuletzt die Lotsung der gefüllten Transporthilfe zum Zielstandort. Eine Lotsung zu einer weiteren Transporthilfe folgt. Am Zielstandort für die Transporthilfe können dann weitere Handlungen wie Verpackung und Versand an der Ware vorgenommen werden. Die Löschung aller Waren erfolgt in ähnlicher Weise durch Erfassung der Entnahme aus der Transporthilfe durch dafür befugtes Personal. Da die Zentrale bzw. EDV-Anlage 100 die genaue abgelegte Warenanzahl kennt, kann ein Verpacker auch hier noch einmal mithilfe der vorgestellten Vorrichtung die korrekte Kommissionierung verifizieren. Die Transporthilfenummer wird im System wieder für eine neue Warenliste freigegeben. Nimmt ein Kommissionierer irrtümlich ein falsches Objekt, erfolgt eine Warnung über die Anzeigevorrichtung 201 oder auch akustisch. Der Fehlgriff wird protokolliert, eine allfällige Korrektur ebenso.

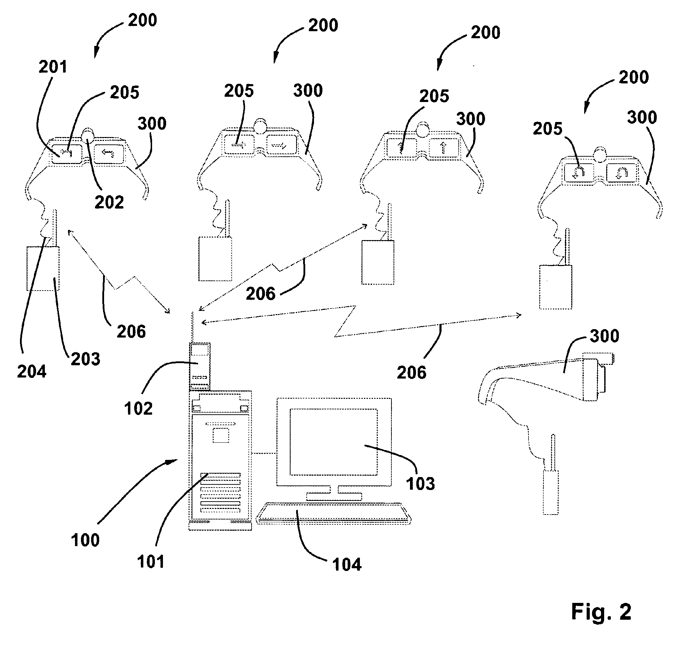

Wird die mobile Einheit 200 wie in Fig. 1 gezeigt als Handgerät ausgeführt, ist ein Arbeiten etwas eingeschränkt. Abhilfe kann eine lösbare Anbringung des Gerätes an einer Transporthilfe sein. Vorteilhaft ist jedoch die Fixierung des Gerätes am Körper, z. B. durch einen Gürtel, und idealerweise ist die Anzeigevorrichtung 201 in einer Datenbrille 300 integriert, wie in Fig. 2 verbildlicht. Künftige Brillen ermöglichen sehr leichte Ausführungen, sodass die Bewegungsfreiheit nur gering eingeschränkt ist. Das Sichtfeld sollte möglichst groß bleiben.

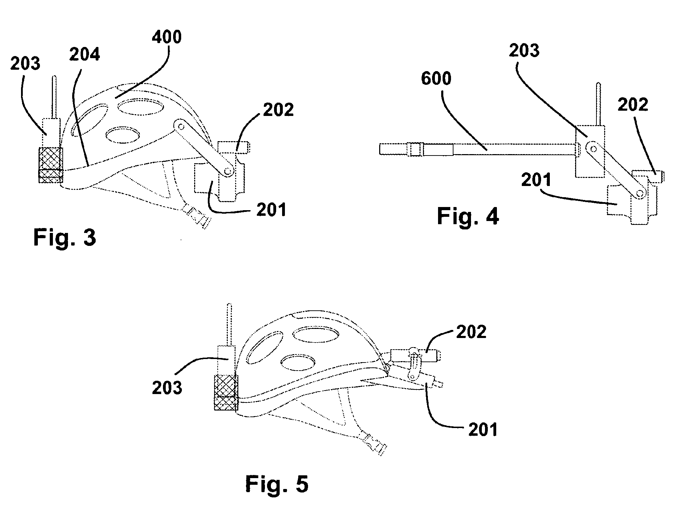

Fig. 3 zeigt einen typischen Datenhelm mit einer Videomonitorvorrichtung bzw. optischen Anzeigevorrichtung 201 ähnlich einem elektronischen Sucher zur Anzeige von Augmented Reality unter Einbindung von mit einer als Kamera ausgebildeten optosensorischen Erfassungseinrichtung 202 erfassten Blickrichtungen. Eine Übertragungseinrichtung 203 kann an einem Helm 400 angebracht sein und ist über eine Verkabelung 204 mit einer Erfassungs- und Anzeigevorrichtung verbunden. Dadurch ergibt sich eine abgeschlossene Einheit, die leicht aufgesetzt oder abgenommen werden kann.

Fig. 4 zeigt ein Stirnband 600 in Seitenansicht zur Befestigung am Kopf. An der Stirn sind hier Vorrichtungen zur Bilderfassung, Bildwiedergabe und Datenverarbeitungs- und Kommunikation bzw. eine optosensorische Erfassungseinrichtung 202, eine optische Anzeigevorrichtung 201 und eine Übertragungseinrichtung 203 montiert.

Eine besondere Ausführungsform der mobilen Einheit 200 ist in Fig. 5 gezeigt. Die Kopfbedeckung zeigt hier eine Bilderfassungseinrichtung 202 in Form einer Videokamera und eine Anzeigevorrichtung 201 in Form eines Laser-Projektors. Letzterer projiziert Wegrichtungs-Pfeile vor dem Benutzer auf den Boden. Auch ein richtig erkanntes Warenobjekt kann mithilfe eines Projektors, z. B. durch einen Kreis, angezeigt werden. Voraussetzung dafür ist jedoch, dass sich der Projektionsstrahl im Blickfeld der Kamera befindet. Vorzugsweise lässt der Laser-Projektor eine Änderung der Projektionsrichtung von schräg zum Boden nach geradeaus parallel zur Blickrichtung der Erfassungseinrichtung zu, um ein eindeutiges Feedback zu erreichen.

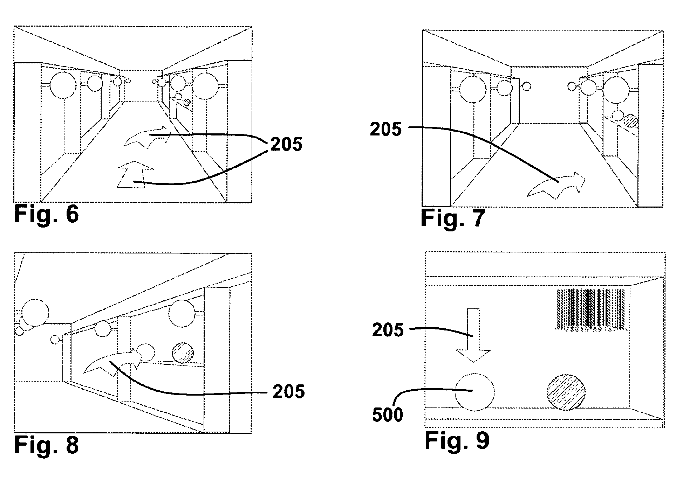

Fig. 6 bis 9 zeigen mögliche Darstellungen während einer Produktnavigation, entweder durch das Display oder das Sichtfeld des Kommissionierers. Hier dienen z. B. die Regalbeschriftungen der Orientierung. Die Buchstaben A bis H liefern dem System die aktuelle Position. Das nächste Listenprodukt ist ein weißer Ball bzw. ein Zielobjekt 500. Dieser befindet sich in der Nähe eines Markers G. Eine Routenplanung (zentral oder in der mobilen Einheit 200) ermittelt die Weginformation und erzeugt die (Lotsen-)Pfeile 205. Folgt der Kommissionierer dem Pfeil 205, ändert sich die Sicht der optosensorischen Erfassungseinrichtung 202 von Fig. 7 dann zu jener in Fig. 8 und schließlich zu jener in Fig. 9. Die Ware wird erkannt und markiert und kann kontrolliert entnommen werden.

Vorwiegendes, jedoch nicht eingeschränktes Anwendungsgebiet sind Lager von Großhändlern oder Versandhäusern sowie Materiallager oder -zwischenlager für Fertigungs- oder Zulieferbetriebe. Dabei ist mit dem erfindungsgemäßen Verfahren bzw. der Vorrichtung hierfür das Zusammenstellen von Waren innerhalb eines Warenlagers selbst durch Personal ohne Kenntnisse über den Aufbau des Lagers und ohne Kenntnis über Ort und Lage der zusammenzustellenden Waren möglich, wobei insbesondere mehrere Kommissionierer gleichzeitig tätig sein können.

## Patentansprüche

1. Verfahren zur visuellen technischen Unterstützung von manuellen Kommissioniervorgängen durch eine Vorrichtung mit zumindest einer mobilen Einheit (200), aufweisend eine optosensorische Erfassungseinrichtung (202), eine optische Anzeigevorrichtung (201), eine Datenverarbeitungseinrichtung (203) und eine Datenschnittstelle zur kabellosen Verbindung (206) mit einer stationären EDV-Anlage (100), welche neben Warenmanagement-Software eine Verbindungseinrichtung (102) für alle aktiven mobilen Einheiten (200) aufweist, **dadurch gekennzeichnet, dass** jede mobile Einheit (200) zyklisch Navigationsinformationen empfängt, welche in Form von Wegweisern, insbesondere Pfeilen (205), über die optische Anzeigevorrichtung (201) ausgegeben werden, wobei Daten zur spezifischen Navigation aufgrund eines Datenvergleiches der Daten aus der jeweiligen optosensorischen Erfassungseinrichtung (202) mit Referenz- oder Modelldaten eines Lagers in der EDV-Anlage (100) oder der mobilen Einheit (200) einerseits und der von der EDV-Anlage (100) an die mobile Einheit (200) übermittelten Lage-Position eines aktuellen Zielobjektes (500) einer zugeordneten wegoptimierten Warenliste andererseits zyklisch ermittelt und adressiert an die zugeordnete mobile Einheit (200) gesendet werden und die neue Navigationsinformation für das nächste Objekt der Warenliste erst nach der optischen Erfassung des aktuellen Zielobjektes (500) oder eines Platzhalter-Ersatzobjektes durch die Erfassungsvorrichtung (202) und eindeutiger Identifizierung desselben durch die EDV-Anlage (100) sowie eindeutige Erfassung und Protokollierung des Kommissioniervorganges eines Waren-Objektes vom Lagerplatz in den Zielplatz erfolgt.

2. Verfahren nach Anspruch 1, **dadurch gekennzeichnet, dass** vor Beginn der Navigation für eine neue Warenzusammenstellung oder Warenergänzung eine Navigation zur aktuell zu benutzenden im ersten Fall leeren oder im zweiten Fall bereits teilgefüllten Transporthilfe stattfindet und bei vorzeitiger Unterbrechung einer vollständigen Warenzusammenstellung eine Position der Transporthilfe für eine spätere Fortsetzung und Beendigung des Auftrages an die stationäre EDV-Anlage (100) gesendet und gespeichert wird oder nach erfolgreicher Beendigung des Auftrages die Navigation der Transporthilfe mit beinhaltender vollständiger Warenzusammenstellung zur gemeinsamen Zielposition erfolgt.

3. Verfahren nach Anspruch 1 oder 2, **dadurch gekennzeichnet, dass** eine von der stationären EDV-Anlage nicht autorisierte Bewegung eines Objektes von dessen Lagerstandort oder aus der Transporthilfe oder der Transporthilfe selbst durch die optosensorische Erfassungseinrichtung (202) erfasst und ebenfalls an die EDV-Anlage (100) übermittelt wird, deren Software den Fehler erkennt und entsprechende Wamhinweise an der optischen Anzeigevorrichtung (201) der mobilen Einheit (200) durch Übermitteln eines Fehlercodes auslöst.

4. Verfahren nach Anspruch 3, **dadurch gekennzeichnet, dass** eine akustische Alarmierung bei optisch erfassten Fehlhandlungen ausgelöst wird.

5. Verfahren nach einem der Ansprüche 1 bis 4, **dadurch gekennzeichnet, dass** Inertialsensoren mit vollständiger Erfassung einer Bewegung und Orientierung eines Kommissionierers zur Unterstützung oder Kontrolle bei der Erfassung der Position und Orientierung dienen, wobei die Inertialsensoren optional durch ortsfeste optisch erfasste Marker kalibriert werden, und umgekehrt bewegliche optisch erfasste Objekte gegenüber ihrem Sollstandort überprüft werden.

6. Vorrichtung zur Durchführung des Verfahrens nach einem der Ansprüche 1 bis 5, mit zumindest einer mobilen Einheit (200) mit optosensorischer Erfassungseinrichtung (202), optischer Anzeigevorrichtung (201), Datenverarbeitungsvorrichtung sowie Software zur Bilddatenverarbeitung und Datenübertragung und mit kabelloser Datenschnittstelle zu einer zentralen elektronischen Datenverarbeitungsvorrichtung bzw. EDV-Anlage (100), **dadurch gekennzeichnet, dass** geografische Anordnungen von Lagereinrichtungen und/oder optische Gegebenheiten durch Form, Farbe und/oder Muster, insbesondere durch plakatartige Anbringungen, geeignet gestaltet und im System vollständig geografisch eindeutig beschrieben und gespeichert sind, um für möglichst viele, in einem Warenlager durch die optosensorische Erfassungseinrichtung (202) während eines Kommissionierens erfassbaren Objekte eine eindeutige Ermittlung und Zuordnung der Position und der Orientierung mithilfe geometrischer Ähnlichkeitsalgorithmen in der zentralen und/oder der mobilen Datenverarbeitungseinrichtung zu ermöglichen.

7. Vorrichtung nach Anspruch 6, **dadurch gekennzeichnet, dass** die optosensorische Erfassungseinrichtung (202) ein Muster-Scanner mit Laser, insbesondere ein Barcodescanner, ist und die aktuellen Positions- und Orientierungsinformationen in Anbringungen am Boden, an Wänden, Waren oder Regalen durch Muster, insbesondere Barcodes, von der Datenverarbeitungsvorrichtung der mobilen Einheit (200) oder nach Übertragung der Musterinformation von der zentralen EDV-Anlage (100) ermittelbar ist.

8. Vorrichtung nach Anspruch 6 oder 7, **dadurch gekennzeichnet, dass** passive Transponder (RFlD-tags) zur Positionsanalyse im Lager unterstützend angebracht sind und Transponder-Leseeinrichtungen in der mobilen Einheit (200) vorgesehen sind, wobei ein Code der Transponder auf Position, Orientierung und/oder Bezeichnung der Ware rückschließen lässt.

9. Vorrichtung nach Anspruch 6 oder 8, **dadurch gekennzeichnet, dass** die optosensorische Erfassungseinrichtung (202) ein Kameramodul ist, durch welches die aktuellen Positions- und Orientierungs- oder Produktinformationen aus Farben, Formen und Mustern mithilfe von Bilddatenanalyse, unterstützt durch Anbringungen am Boden, an Wänden, Regalen, Lagerplätzen oder am Produkt, von der mobilen Einheit (200) ermittelbar sind, gegebenenfalls nach Bildübermittlung durch die EDV-Anlage (100).

10. Vorrichtung nach einem der Ansprüche 6 bis 9, **dadurch gekennzeichnet, dass** die optische Anzeigevorrichtung (201) durch Leuchtdioden, ein Display, insbesondere ein Liquid Crystal Display (LCD) oder Organic Light Emitting Display (OLED), oder Kombinationen davon gebildet ist, wobei die optische Anzeigevorrichtung (201) geeignet ist, die Gehrichtung in codierter Form oder durch Wegweiser darzustellen, insbesondere in Form von Richtungspfeilen, welche unabhängig von der Orientierung der mobilen Einheit (200) stets den richtigen Weg angeben.

11. Vorrichtung nach einem der Ansprüche 6 bis 9, **dadurch gekennzeichnet, dass** die optische Anzeigevorrichtung (201) durch einen Laser-Projektor gebildet ist, welcher Wegweiser auf umliegende Objekte, insbesondere einen Boden, projiziert und bei Erkennen das jeweilige Zielobjekt (500) markiert.

12. Vorrichtung nach einem der Ansprüche 6 bis 11, **dadurch gekennzeichnet, dass** ein Inertialsensor zur zusätzlichen Erfassung einer Bewegung oder Drehbewegung der mobilen Einheit (200) vorgesehen ist.

13. Vorrichtung nach Anspruch 1 oder 12, **dadurch gekennzeichnet, dass** die Lasereinrichtung des Laser-Projektors zusätzlich als Scanner-Laser eingesetzt ist, dessen Reflexlicht mit Code-Information von Code-Markierungen, insbesondere Barcode-Marken, ein optischer Sensor erfasst.

14. Vorrichtung nach Anspruch 13, **dadurch gekennzeichnet, dass** zumindest eine der Datenverarbeitungsvorrichtungen real erfasste Daten, insbesondere Videodaten und konstruierte virtuelle Daten, zu Augmented-Reality-Daten verknüpft und über die optische Anzeigevorrichtung (201) zur kombinierten Anzeige aufbereitet.

15. Vorrichtung nach Anspruch 13 oder 14, **dadurch gekennzeichnet, dass** die Daten der optosensorischen Erfassungseinrichtung (202) entweder durch zwei beabstandete Sensoren oder durch Bildumrechnung aufgrund der gespeicherten geografischen Daten eines Lageraufbaus durch eine geeignete optische Anzeigevorrichtung eine dreidimensionale Tiefenwirkung beim Betrachter ermöglichen, insbesondere durch Erfassung und/oder Generierung versetzter Ansichten für jedes Auge.

## Claims

1. A method for visual technical support of manual commissioning processes by means of a device with at least one mobile unit (200), having an optical sensor based detection device (202), an optical display device (201), a data processing device (203) and a data interface for wireless connection (206) to a stationary EDP system (100), which, as well as goods management software, also has a connection device (102) for all active mobile units (200), **characterized in that** each mobile unit (200) cyclically receives navigation information items which are output in the form of direction signs, in particular arrows (205), via the optical display device (201), wherein on the basis of a data comparison of the data from the respective optical sensor based detection device (202) with reference or model data from a store in the EDP system (100) or the mobile unit (200), and with the spatial position of a current target object (500) of an assigned route-optimised goods list transmitted by the EDP system (100) to the mobile unit (200), data for a specific navigation purpose are cyclically determined and sent in an addressed manner to the assigned mobile unit (200) and the new navigation information for the next object of the goods list is not obtained until after the optical detection of the current target object (500) or of a replacement place-holder object by the detection device (202) and after unambiguous identification of same by the EDP system (100) and unambiguous detection and recording of the process of commissioning a goods object from the storage location into the target location.

2. The method according to claim 1, **characterized in that** before the start of the navigation for a new or additional set of goods, navigation takes place to the means of transport currently to be used, which is empty in the first case or already partially filled in the second case, and in the event of premature interruption of a complete set of goods a position of the means of transport is sent to the stationary EDP system (100) and stored for later continuation and completion of the order, or after successful completion of the order the means of transport containing a complete set of goods is navigated to the common target position.

3. The method according to claim 1 or 2, **characterized in that** a movement of an object from its storage location or out of the means of transport, or of the means of transport itself, that is not authorised by the stationary EDP system is detected by the optical sensor based detection device (202) and also transmitted to the EDP system (100), the software of which detects the errors and issues corresponding warning indications on the optical display device (201) of the mobile unit (200) by transmission of an error code.

4. The method according to claim 3, **characterized in that** an acoustic alarm signal is issued when optically detected erroneous actions occur.

5. The method according to one of claims 1 to 4, **characterized in that** inertial sensors with complete detection of a movement and orientation of a commissioning agent are used for the purposes of support or control during the detection of the position and orientation, the inertial sensors being optionally calibrated by optically detected markers at fixed locations, and conversely, mobile optically detected objects being checked with respect to their target location.

6. A device for carrying out the method according to one of claims 1 to 5, having at least one mobile unit (200) with an optical sensor based detection device (202), optical display device (201), data processing device and software for image data processing and data transmission and with a wireless data interface to a central electronic data processing device or EDP system (100), **characterized in that** geographical arrangements of storage devices and/or optical features are suitably configured in terms of shape, colour and/or pattern, in particular by means of poster-like attachments, and are completely uniquely geographically described and stored in the system, in order to facilitate, for as many objects as possible detected in a goods store by the optical sensor based detection device (202) during a commissioning operation, a unique determination and assignment of the position and orientation, by means of geometrical similarity algorithms in the central and/or the mobile data processing device.

7. The device according to claim 6, **characterized in that** the optical sensor based detection device (202) is a pattern scanner with a laser, in particular a barcode scanner, and the current position and orientation information can be determined by the data processing device of the mobile unit (200) in attachments on the floor, on the walls, on goods or shelves by patterns, in particular barcodes, or after transmission of the pattern information by the central EDP system (100).

8. The device according to claim 6 or 7, **characterized in that** passive transponders (RFID tags) are mounted in the store as support for the position analysis and transponder-reading devices are provided in the mobile unit (200), therein a code of the transponders allows the position, orientation and/or designation of the goods item to be deduced.

9. The device according to claim 6 or 8, **characterized in that** the optical sensor based detection device (202) is a camera module by means of which the current position and orientation or product information can be determined by the mobile unit (200) from colours, shapes and patterns with by means of image data analysis, supported by attachments on the floor, on the walls, shelves, storage locations or on the product, where appropriate after image transmission by the EDP system (100).

10. The device according to one of claims 6 to 9, **characterized in that** the optical display device (201) is formed by light-emitting diodes, a display, in particular a liquid crystal display (LCD) or organic light emitting display (OLED), or combinations thereof, wherein the optical display device (201) is suitable for displaying the direction of travel in coded form or by means of direction signs, in particular in the form of directional arrows, which always indicate the correct route regardless of the orientation of the mobile unit (200).

11. The device according to one of claims 6 to 9, **characterized in that** the optical display device (201) is formed by a laser projector which projects direction signs onto surrounding objects, in particular a floor, and marks the respective target object (500) on detection.

12. The device according to one of claims 6 to 11, **characterized in that** an inertial sensor is provided for the additional detection of a movement or rotation of the mobile unit (200).

13. The device according to claim 11 or 12, **characterized in that** the laser device of the laser projector is additionally used as a scanner laser, the reflected light of which is detected with code information from code markings, in particular barcode marks, by an optical sensor.

14. The device according to claim 13, **characterized in that** at least one of the data processing devices combines actually detected data, in particular video data and constructed virtual data, to form augmented reality data and prepares them for combined display via the optical display device (201).

15. The device according to claim 13 or 14, **characterized in that** the data from the optical sensor based detection device (202), either by means of two sensors spaced apart or by image conversion based on the stored geographical data of a stored inventory by a suitable optical display device, facilitate a three-dimensional depth effect at the observer, in particular by detection and/or generation of views that are offset for each eye.

## Revendications

1. Procédé d'assistance technique visuelle dans les opérations manuelles de préparation de commande au moyen d'un dispositif avec au moins une unité mobile (200), présentant un équipement de détection optique sensorielle (202), un dispositif d'affichage visuel (201), un dispositif de traitement de données (203) et une interface de données pour une liaison sans fil (206) avec un système informatique stationnaire (100) qui présente en plus d'un logiciel de gestion de marchandises un équipement de liaison (102) pour toutes les unités mobiles (200) actives, **caractérisé en ce que** chaque unité mobile (200) reçoit de façon cyclique des informations de navigation qui sont sorties sous forme d'indicateurs de chemin, en particulier de flèches (205), par le dispositif d'affichage visuel (201), dans lequel des données destinées à une navigation spécifique sont déterminées de façon cyclique sur la base d'une comparaison de données des données issues de l'équipement de détection optique sensorielle (202) respectif avec des données de référence ou de modèle d'un entrepôt dans le système informatique (100) ou de l'unité mobile (200) d'une part, et de la position localisée, transmise à l'unité mobile (200) par le système informatique (100), d'un objet cible (500) actuel parmi une liste de marchandises à trajet optimisé associée d'autre part, et sont envoyées avec une adresse à l'unité mobile (200) associée, et la nouvelle information de navigation pour l'objet suivant de la liste de marchandises est effectuée seulement après la détection optique de l'objet cible (500) actuel ou d'un objet de remplacement fictif par le dispositif de détection (202) et après une identification univoque de celui-ci par le système informatique (100) ainsi qu'une détection univoque et une consignation de l'opération de préparation de commande d'un objet marchandise du lieu de stockage vers le lieu cible.

2. Procédé selon la revendication 1, **caractérisé en ce qu'**avant le début de la navigation en vue d'un nouvel assortiment de marchandises ou d'un ajout de marchandises, on effectue une navigation jusqu'au support de transport actuellement à utiliser, vide dans un premier cas ou déjà partiellement rempli dans un deuxième cas, et en cas d'interruption prématurée d'un assortiment de marchandises complet, une position du support de transport pour une poursuite et un achèvement ultérieurs de la commande est envoyée au système informatique stationnaire (100) et mémorisée, ou bien, après un achèvement réussi de la commande, la navigation du support de transport avec l'assortiment de marchandises complet jusqu'à la position cible commune est effectuée.

3. Procédé selon les revendications 1 ou 2, **caractérisé en ce qu'**un mouvement non autorisé par le système informatique d'un objet hors de son lieu de stockage ou du support de transport, ou bien du support de transport lui-même, est détecté par l'équipement de détection (202) et est également transmis au système informatique (100) dont les logiciels reconnaissent l'erreur et déclenchent des avertissements adéquats sur le dispositif d'affichage visuel (201) de l'unité mobile (200) par la transmission d'un code d'erreur.

4. Procédé selon la revendication 3, **caractérisé en ce qu'**une alarme acoustique est déclenchée en cas de fausses manipulations détectées de façon optique.

5. Procédé selon l'une quelconque des revendications 1 à 4, **caractérisé en ce que** des capteurs inertiels capables d'une détection complète d'un mouvement et d'une orientation d'un préparateur de commande servent à l'assistance ou au contrôle lors de la détection de la position et de l'orientation, les capteurs inertiels étant calibrés en option par des marqueurs fixes détectés de façon optique, et inversement, des objets mobiles détectés de façon optique sont vérifiés par rapport à leur emplacement théorique.

6. Dispositif pour exécuter le procédé selon l'une quelconque des revendications 1 à 5, avec au moins une unité mobile (200) avec un équipement de détection optique sensorielle (202), un dispositif d'affichage visuel (201), un dispositif de traitement de données ainsi que des logiciels de traitement de données d'image et de transmission de données et avec une interface de données sans fil avec un dispositif de traitement de données électronique centralisé, ou système informatique (100), **caractérisé en ce que** des dispositions géographiques d'équipements de stockage et/ou des conditions optiques sont configurées de façon adéquate par des formes, des couleurs et/ou des motifs, en particulier par des aménagements de type affiche, et sont décrites et mémorisées dans le système entièrement de façon géographiquement univoque, afin de permettre pour le plus grand nombre possible d'objets pouvant être détectés dans un entrepôt de marchandises par l'équipement de détection optique sensorielle (202) pendant une préparation de commande une détermination et affectation univoques de la position et de l'orientation à l'aide d'algorithmes de similitude géométrique dans l'équipement de traitement de données centralisé et/ou mobile.

7. Dispositif selon la revendication 6, **caractérisé en ce que** l'équipement de détection optique sensorielle (202) est un scanner de motifs muni d'un laser, en particulier un scanner de codes à barres, et les informations actuelles de position et d'orientation peuvent être déterminées dans des aménagements au sol, sur les murs, sur des marchandises ou des étagères par le biais de motifs, en particulier de codes à barres, par le dispositif de traitement de données de l'unité mobile (200), ou après transmission des informations de motif, par le système informatique (100) centralisé.

8. Dispositif selon les revendications 6 ou 7, **caractérisé en ce que** des transpondeurs passifs (étiquettes RFID) sont installés dans l'entrepôt pour contribuer à l'analyse de position, et des équipements de lecture à transpondeur sont prévus dans l'unité mobile (200), un code des transpondeurs permettant de déduire la position, l'orientation et/ou la désignation de la marchandise.

9. Dispositif selon les revendications 6 ou 8, **caractérisé en ce que** l'équipement de détection optique sensorielle (202) est un module de caméra permettant de déterminer des informations actuelles de position et d'orientation ou de produit à partir de couleurs, de formes et de motifs à l'aide d'une analyse de données d'image, assistée par des aménagements au sol, sur les murs, des étagères, des emplacements de stockage ou sur le produit, par l'unité mobile (200), le cas échéant après transmission d'image, par le système informatique (100).

10. Dispositif selon l'une quelconque des revendications 6 à 9, **caractérisé en ce que** le dispositif d'affichage visuel (201) est formé par des diodes électroluminescentes, un écran, en particulier un écran à cristaux liquides (LCD) ou un écran à diodes électroluminescentes organiques (OLED), ou des combinaisons de ceux-ci, dans lequel le dispositif d'affichage visuel (201) est adapté pour représenter le sens du déplacement sous une forme codée ou par des indicateurs de chemin, en particulier sous la forme de flèches de direction qui indiquent toujours de bon chemin indépendamment de l'orientation de l'unité mobile (200).

11. Dispositif selon l'une quelconque des revendications 6 à 9, **caractérisé en ce que** le dispositif d'affichage visuel (201) est formé par un projecteur laser qui projette des indicateurs de chemin sur des objets environnants, en particulier sur le sol, et marque l'objet cible (500) respectif en cas de reconnaissance.

12. Dispositif selon l'une quelconque des revendications 6 à 11, **caractérisé en ce qu'**un capteur inertiel est prévu pour une détection supplémentaire d'un mouvement ou d'une rotation de l'unité mobile (200).

13. Dispositif selon les revendications 11 ou 12, **caractérisé en ce que** l'équipement laser du projecteur laser est également mis en ouvre comme un laser de scanner dont la lumière réfléchie avec des informations de code ou des marquages de code, en particulier des marques de codes à barres, est détectée par un capteur optique.

14. Dispositif selon la revendication 13, **caractérisé en ce qu'**au moins l'un des dispositifs de traitement de données associe des données détectées réellement, en particulier des données vidéo, et des données virtuelles synthétisées, en données de réalité augmentée et les met en forme par l'intermédiaire du dispositif d'affichage visuel (201) en vue d'un affichage combiné.

15. Dispositif selon les revendications 13 ou 14, **caractérisé en ce que** les données de l'équipement de détection optique sensorielle (202) permettent au niveau de l'observateur un effet de profondeur tridimensionnel, soit par deux capteurs espacés, soit par une conversion d'image sur la base des données géographiques mémorisées d'une structure d'entrepôt par un dispositif d'affichage visuel adéquat, en particulier par la détection et/ou la génération de vues décalées pour chaque fil.
